# EUROPÄISCHE PATENTSCHRIFT

(11) **EP 0 902 183 B1**
(45) Veröffentlichungstag und Bekanntmachung des Hinweises auf die Patenterteilung: **30.07.2003**
(21) Anmeldenummer: 98810553.2
(22) Anmeldetag: 17.06.1998
(51) Int. Cl.: F03B 1/02

(54) **Befestigung von Schaufeln an einer Peltonlaufradscheibe**
Method for securing buckets to a Pelton turbine wheel
Méthode de fixation des aubes sur le rotor d'une turbine Pelton

(30) Priorität: 04.09.1997 EP 97810630
(43) Veröffentlichungstag der Anmeldung: 17.03.1999
(73) Patentinhaber: VA TECH HYDRO GmbH & Co., 1140 Wien (AT)
(72) Erfinder: Keiser, Walter, 6330 Cham (CH)
(74) Vertreter: VA TECH Patente GmbH & Co

(56) Entgegenhaltungen:
- CH-A- 111 442
- CH-A- 159 487
- DE-A- 3 938 357
- FR-A- 570 124

## Beschreibung

Die Erfindung handelt von einem Peltonrad mit einer Radscheibe und mit separat gefertigten Bechern mit Füssen, die lösbar in der Radscheibe mit Verankerungselementen befestigt sind.

Peltonturbinen werden in gebirgigen Gegenden, in denen ein entsprechend hohes Wassergefälle vorhanden ist, zur Stromerzeugung eingesetzt. Dabei besteht auch ein Bedürfnis an Kompaktturbinen für die Stromversorgung von einzelnen Dörfern im Leistungsbereich von beispielsweise 1 Megawatt, um abgelegene und schwer zugängliche Gegenden mit Strom zu versorgen. Die Hauptnachteile, um ausserhalb von industriell geführten Kraftwerken solche Peltonturbinen erschwinglich zu machen, liegen in den hohen Kosten vom Turbinenrad und in der Notwendigkeit, hochwertiges und geschultes Fachpersonal für dessen Instandhaltung einsetzen zu müssen. Einstückige Peltonräder erfordern eine aufwendige Demontage, sorgfältige Reparaturschweissungen an den Bechern, die am meisten dem Verschleiss ausgesetzt sind und anschliessend ein Spannungsarmglühen des Rades und im weiteren ein Polieren und Ausgleichen vom Verzug. Zusammengesetzte Peltonräder sind in ihrer Herstellung und Montage ebenfalls sehr kostenaufwendig. So zeigt die DE-B-3 938 357 ein Peltonrad, das an den einzelnen Becherfüssen mit zwei seitlichen Radscheiben zu einem Radstern zusammengefügt ist. Eine solche Konstruktion ist immer noch recht kompliziert und setzt eine vollständige Demontage des Rades voraus, wenn ein Becher ausgewechselt werden muss.

Es ist die Aufgabe der vorliegenden Erfindung, ein kostengünstiges Peltonrad zu liefern, dessen Becher auf einfache Art auswechselbar sind. Diese Aufgabe wird mit den Kennzeichen vom unabhängigen Anspruch 1 gelöst, indem die Becher auf ihrer Rückseite in tangentialer Richtung von einer Stützschulter der Radscheibe abgestützt sind, die in radialer Richtung um ein Mass "a" weiter als der nabenseitige Rand der Becher nach aussen vorsteht, um die von einem Düsenstrahl aufgegebenen Kräfte abzufangen.

Diese Anordnung hat den Vorteil, dass die vom Düsenstrahl erzeugten Biegemomente im Becherfuss kleiner werden und dass ein Grossteil der Kräfte durch die Stützschultern aufgenommen wird, die aus dem gleich hochwertigen Material bestehen, wie es die Radscheibe aus Festigkeitsgründen sein muss. Diese Abstützung gestattet es, die Wandstärke der Becher zur Unterseite gering zu halten und auch die Becherfüsse schlank zu halten, so dass die Masse eines vollständigen Becherteils gering ausfällt und somit relativ einfache Sicherungselemente zur Aufnahme der durch die Becherteile erzeugten Fliehkräfte möglich sind.

Vorteilhafte Weiterbildungen der Erfindung werden durch die abhängigen Ansprüche 2 bis 17 erreicht. So lässt sich die Wirkung der Stützschultern noch wesentlich verbessern, wenn sie um mehr als ein Drittel der radialen Becherlänge weiter als der nabenseitige obere Rand der Becher in radialer Richtung nach aussen vorstehen.

Eine weitere Verbesserung zur Vereinfachung der Sicherungselemente besteht in der Wahl von leichten Werkstoffen für die Becher. So bringen Becher aus Kunststoff, faserverstärktem Kunststoff oder Leichtmetall-Legierungen eine weitere Reduktion der Fliehkräfte an den Becherfüssen. Kunststoffbecher lassen sich zum Beispiel in hoher Formgenauigkeit und preisgünstig in einer Form herstellen.

Eine weitere Verbesserung besteht darin, ein radiales Einschieben eventuell mit einer Schwenkung für die Becher vorzusehen. Die Radscheibe wird dazu an ihrer Peripherie mit einem radialen Einstich versehen, sodass paarweise angeordnete Abstützschultern entstehen, während der Raum vom Einstich für Verstärkungsrippen am Becherfuss nutzbar ist, die der Zentrierung und seitlichen Abstützung der Becher an der Radscheibe dienen und die gleichzeitig die Biegesteifigkeit vom Becherfuss vergrössern. Auf diese Weise können quer zur Radscheibe Sicherungsbolzen angebracht werden, die nur mit einem Teilbereich ihres Umfanges an den Becherfüssen anliegen und diese gegen Herausfallen sichern. Die Rippen können längs des Einstichs soweit entlang gezogen sein, dass sie sich in montierter Stellung gegenseitig im Einstich gegebenenfalls unter einer vorgegebenen Vorspannung berühren.

Eine weitere Massnahme kann darin bestehen, den Einstich leicht konisch nach innen zu gestalten, um mit passend konisch ausgeformten Verstärkungsrippen einen leichten Presssitz zu erzeugen.

Eine andere Montageart besteht darin, den Becherfuss zylindrisch zu gestalten und wie bei einer Schaufelbefestigung axial in eine passende Aussparung der Radscheibe einzuschieben, wobei durch Vor- und Rücksprünge ebenfalls eine direkte Befestigung entsteht.

Ein weiterer Vorteil liegt darin, dass alle wesentlichen Masse durch die Radscheibe bestimmt sind und dass die Montage oder das Auswechseln von einem Becher an einer fertig installierten Radscheibe durch einen Durchschnitts-Mechaniker vorgenommen werden kann. Dadurch, dass die Becher als einfach auswechselbare Verschleissteile konzipiert sind, können unvorhergesehene Beschädigungen beispielsweise durch im Wasser mitgeführte Steine sowie Verschleiss, beispielsweise durch mitgeführten Sand durch Auswechseln von Bechern behoben werden. Die besondere Art der Aufhängung und Stützung der Becher gestattet es, leichtere und mechanisch schwächere Werkstoffe, als es das Material der Radscheibe ist, zu verwenden. So zeigen Becher aus faser- oder gewebeverstärkten Kunstoffen, wie beispielsweise gewebeverstärkte Epoxyd-Harze, ganz vernünftige Resultate. Als Fasern können auch Kohlefasern, Glasfasern oder Kunststoffasern verwendet werden. Als Kunststoffe können zum Beispiel Epoxyd-Harz, Polyester oder Polyurethan verwendet werden. Wenn man die Formenkosten durch Beschränkung der Bechergrössen auf eine vorgegebene Stufung beschränkt, dann ergeben sich auch vertretbare Herstellkosten für die Becher. Der eigentliche Vorteil liegt im Unterhalt, da nicht jedesmal ein Spezialist anreisen muss, um Becher zu wechseln. Die Fertigungskosten sind ebenfalls bescheiden, da nur ein geschmiedeter Radteil notwendig ist. Wegen der schlanken Radform entstehen ebenfalls nur geringe Schleppverluste durch Spritzwasser.

Im folgenden wird die Erfindung durch Ausführungsbeispiele beschrieben. Es zeigen:
- Fig. 1: Schematisch einen Ausschnitt an der Peripherie einer Radscheibe während der Montage;
- Fig. 2: schematisch einen Schnitt durch einen Becher vor seinem radialen Einsetzen in der Radscheibe von Fig. 1;
- Fig. 3: schematisch einen Schnitt durch Fig. 1;
- Fig. 4: schematisch eine Draufsicht auf den Becher der Fig. 2;
- Fig. 5: schematisch einen Ausschnitt an der Peripherie einer Radscheibe mit einer Lösung, bei der die Becher bei ihrem radialen Einstecken zusätzlich eine Schwenkung erfahren;
- Fig. 6: schematisch eine Draufsicht auf einen Becher der Fig. 5;
- Fig. 7: schematisch einen Ausschnitt analog zu Fig. 1 bei dem ein in axialer Richtung zylindrischer Becherfuss durch axiales Einschieben in einer Radscheibe befestigbar ist;
- Fig. 8: schematisch einen Ausschnitt gemäss der Anordnung von Fig. 7, bei der die Befestigung von einem axial einschiebbaren Becherfuss abgewandelt ist;
- Fig. 9: schematisch eine Draufsicht auf einen Becher der Fig. 8; und
- Fig. 10: schematisch einen Schnitt durch den Becher der Fig. 9.
Die Figuren zeigen ein Peltonrad mit einer Radscheibe 1 und mit einzelnen separat gefertigten Bechern 2, welche mit ihren Füssen 3 lösbar in der Radscheibe mit Verankerungselementen 4 befestigt sind. Die Becher 2 sind mit ihren Füssen 3 in radialer oder in axialer Richtung in der Radscheibe einfahrbar, wobei die Becher 2 auf ihrer Rückseite 6 in tangentialer Richtung von einer Stützschulter 7 der Radscheibe abgestützt, welche in radialer Richtung um ein Mass "a" weiter als der nabenseitige Rand 8 der Becher 2 nach aussen vorsteht, um die von einem Düsenstrahl an den Bechern angreifenden Kräfte abzufangen.

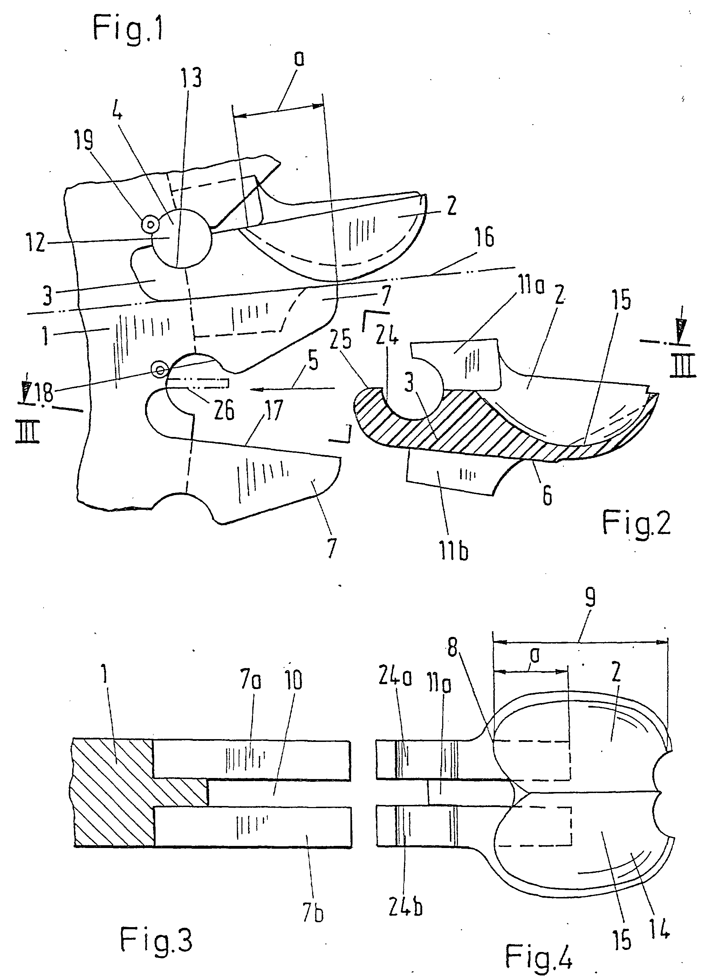

In den Figuren 1, 2, 3 und 4 ist ein erstes Ausführungsbeispiel gezeigt. Eine Radscheibe 1 für ein Peltonrad ist an ihrer Peripherie mittig mit einem radialen Einstich 10 versehen. Aus den Seitenwänden die diesen Einstich 10 begrenzen, ist jeweils eine Kontur herausgearbeitet, die einem relativ dünnen Becherfuss 3 entspricht, wobei der Becherfuss den tiefsten Punkt vom Einstich 10 beidseitig überragt, um den Fuss 3 selbst zu führen. Am Becherfuss 3 ist mittig eine in den Einstich 10 passende Verstärkungsrippe 11a, 11b angebracht, deren Höhe der Teilung des Rades angepasst ist. Diese Rippe verleiht dem Fuss 3 zusätzlich Biegesteifigkeit und stützt sich, wenn das Peltonrad vollständig bestückt ist, in Umfangsrichtung auf den benachbarten Rippen ab. Der eigentliche Becherfuss 3 entspricht nur etwa der Becherhöhe, sodass an der Radscheibe 1 Stützschultern 7, 7a, 7b stehen bleiben, die grosse Kräfte in tangentialer Richtung aufnehmen können. Dadurch, dass diese Stützschultern im montierten Zustand vom nabenseitigen Becherand 8 in radialer Richtung annähernd bis um die Hälfte der radialen Becherweite 9 nach aussen vorstehen, wird ein Grossteil der an den Bechern 2 von einem Düsenstrahl abgegebenen Druckkräfte direkt an die Stützschultern 7, 7a, 7b weitergegeben und es entstehen verringerte Biegemomente am Becherfuss 3. Je grösser der Abstand "a" einer Stützschulter 7, 7a, 7b vom nabenseitigen Rand 8 der Becher gewählt wird, desto geringer fallen die zu kompensierenden Biegemomente im Becher aus. Eine geringe Höhe von Becher und Fuss genügt, um diese Biegemomente zu kompensieren. Gleichzeitig wird das Gewicht von Becher 2 und Fuss 3 verringert, was zu einer einfacheren Aufhängung und Kompensation der Fliehkräfte führt. Im vorliegenden Beispiel sind die Becher 2 aus einem kohlefaserverstärkten Epoxydharz hergestellt, was gegenüber einem legierten Stahl zu einer weiteren Reduktion der Fliehkräfte führt. Die Radscheibe besteht aus einem geschmiedeten legierten Stahl mit 13 % Chrom und 4 % Nickel, wie er für Wasserturbinen üblich ist. Zur Montage werden die Becher 2 mit ihren Füssen annähernd radial 5 an der montierten Radscheibe 1 eingeschoben bis die Füsse 3 an einem hinteren Anschlag anschlagen und auf Stützflächen 17 der Stützschultern aufliegen. Die Sicherung gegen Fliehkräfte erfolgt mit einem Bolzen 12, der in axialer Richtung in eine Bohrung eingeschoben wird und halbseitig je am Becherfuss und an der darüberliegenden Stützschulter anliegt. Dadurch, dass diese Bohrung in einer annähernd radial verlaufenden Trennebene zwischen Becherfuss 3 und der darüberliegenden Stützschulter 7 angebracht ist, entsteht eine Gegenschulter 18, die Bolzen 12 und Fuss 3 am Herausfallen hindert. Der Bolzen 12 wird somit nur auf Druck und auf Scherung in einer axialen Ebene beansprucht. Der Anschlag für das Einschieben der Becher 2 ist so toleriert, dass der Bolzen 12 unter leichter Vorspannung an der Gegenschulter 18 anliegt. Der Bolzen 12 ist in axialer Richtung links und rechts durch eine in der Radscheibe versenkte Schraube 19 fixiert deren seitlich vorstehender Kopf in eine Ausnehmung des Bolzens eingreift. Auf diese Weise stehen über die einem einteiligen Peltonrad entsprechende, schlanke Kontur der Radscheibe 1 keine Schultern vor, die die Spritzwasserabfuhr verschlechtern. Am Becherfuss 3 übertragen Halteflächen 24 Biegekräfte und Fliehkräfte auf den Bolzen 12, der sie an die Gegenschulter 18 weitergibt. Ein Teil der Biegekräfte wird auch direkt über Schultern 25 vom Becherfuss 3 auf die Radscheibe übertragen.

Für das Auswechseln eines Bechers werden zunächst die Sicherungsschrauben 19 gelöst und der Bolzen 12 herausgeklopft. Das Herausziehen der Becher 2 kann durch eine keilförmig zugeschnittene Kunststoffplatte 26 unterstützt werden, wenn diese statt des Bolzens 12 in der Bohrung in axialer Richtung eingeschlagen wird. Der neue Becher wird radial eingeschoben und angeklopft bis er an den Abstützflächen 17 und an einem Tiefenanschlag aufliegt. Anschliessend wird der Bolzen 12 in passender Winkellage eingeschlagen und durch die Schrauben 19 gesichert. Für eine solche Operation kann die Radscheibe auf ihrer Welle verbleiben. Da die Radscheibe 1 mit Bechern 2 gewuchtet wurde, die ein Einheitsgewicht aufweisen und auch der ausgewechselte Becher dieses Einheitsgewicht aufweist, sind die beim Becherwechsel entstehenden Unwuchten innerhalb der zulässigen Toleranz.

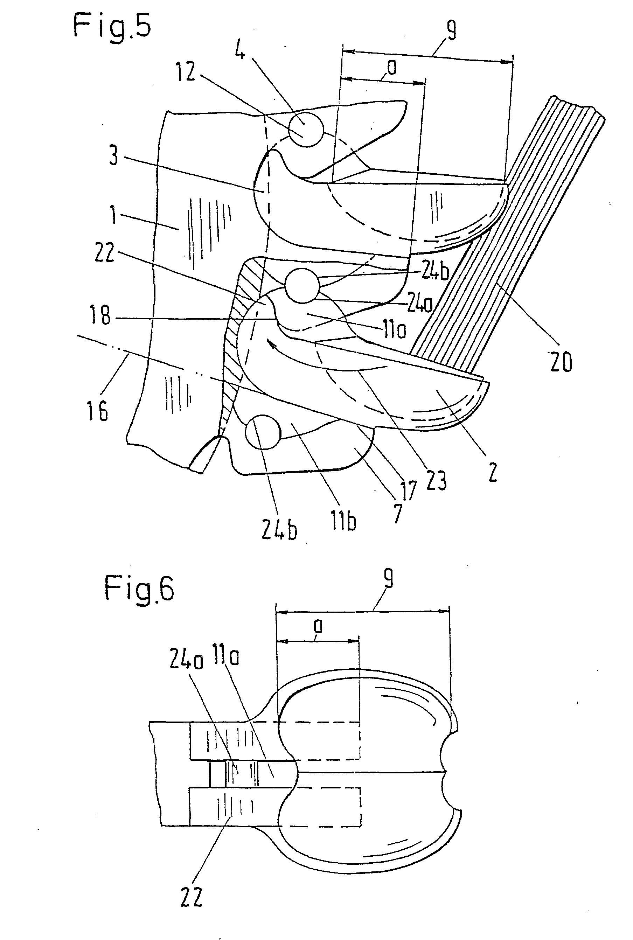

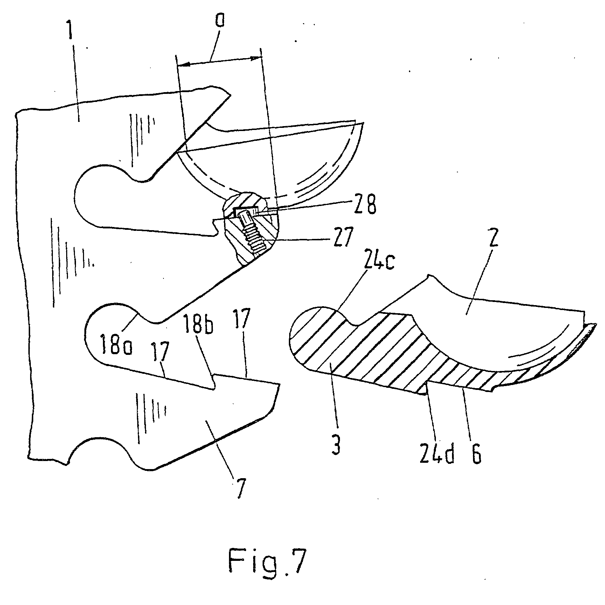

Ein weiteres Ausführungsbeispiel ist in den Figuren 5 und 6 gezeigt. Es unterscheidet sich vom ersten Beispiel dadurch, dass zur Sicherung der Becherfuss 3 gegen Herausfallen als Haken 22 ausgebildet ist, der in einer Einführrichtung 23 beim radialen Einschieben zusätzlich geschwenkt werden muss, um die Radscheibe an einer Gegenschulter 18 zu hintergreifen, und dass ausserdem an jeder Verstärkungsrippe 11a, 11b ein durch eine Stützschulter 7 axial durchgesteckter Bolzen 12 als Sicherungselement 4 auf einer Haltefläche 24a, 24b anliegt. Die Rippen 11a, 11b berühren keine Nachbarrippen 11b, 11a. Eine Veränderung der Winkellage 16 der Stützflächen 17 an den Stützschultern 7 relativ zum Zentrum der Radscheibe zwingt daher nicht zu grundsätzlich neuen Bechern 2, sondern nur zum abschnittsweisen Schwenken der Kontur für die Becheraufnahme und zum Abringen von anderen Halteflächen 24a, 24b an den Verstärkungsrippen 11a, 11b. Ein solches Konzept erlaubt es mit einer Einheitsgrösse von Bechern Radscheiben 1 von unterschiedlichem Durchmesser zu bestücken und eine Winkellage 16 einzunehmen, die einer optimalen Anspritzrichtung eines Düsenstrahls 20 unter diesen Umständen entspricht. Auf diese Weise kann mit wenigen Bechergrössen ein ganzes Auslegungsfeld abgedeckt werden und gleichzeitig werden wegen der grösseren Becherstückzahlen die Kosten pro Becher niedriger. Dies trifft besonders dann zu, wenn die Formgebung der Becher durch Ausgiessen in Formen erfolgt, da der Formkostenanteil umgekehrt proportional zur gefertigten Becherzahl ist. Becher aus Kunststoff oder Leichtmetall können unter diesem Aspekt kostengünstig sein.

Figur 7 zeigt eine Ausführung, bei der die Becher 2 in axialer Richtung zylindrische Becherfüsse 3 aufweisen, die mit Halteflächen 24c, 24d an Gegenschultern 18a, 18b der Radscheibe 1 anliegen. Die Becher werden in axialer Richtung eingesetzt und mittig durch eine Zentrierschraube 27 gesichert, die in einem Langloch 28 an der Becherunterseite 6 eingreift. Ein Teil der Stützfläche 17 ist in Form einer Stufe abgesetzt, um eine Gegenschulter 18b zu erzeugen.

Wenn die Becherteilung D₁/B₂ (wobei D₁ = Strahlkreisdurchmesser und B₂ = Becherbreite bedeutet) kleine Werte annimmt, kann es aus Platzgründen vorteilhaft sein, die in Figur 7 gezeigte Lösung weiter zu vereinfachen.

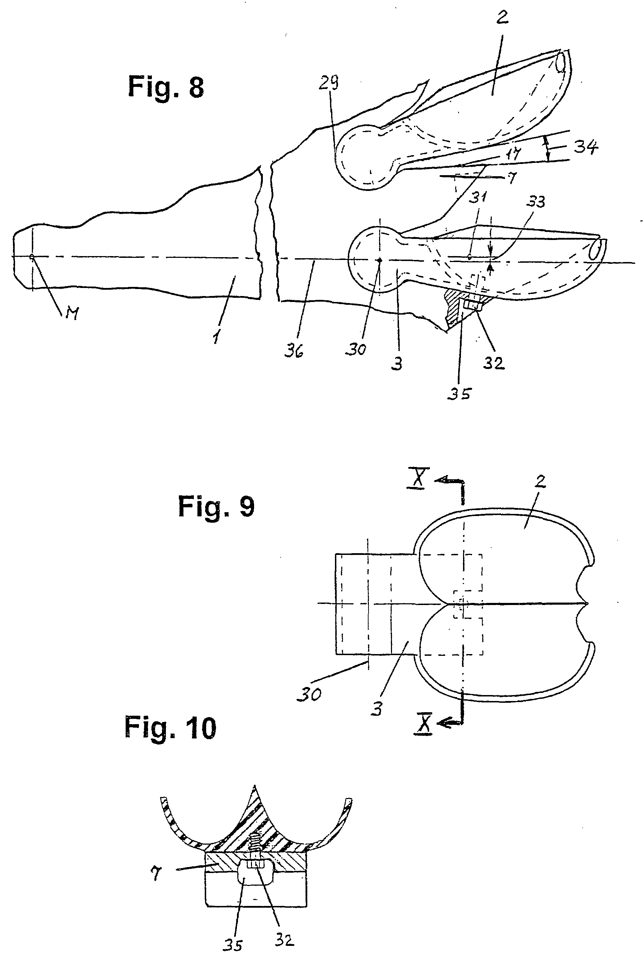

In den Figuren 8, 9 und 10 ist eine solche vereinfachte Lösung aufgezeigt. Halteflächen 24 und Gegenschultern 18 sind in axialer Richtung verlaufende kreiszylindrische Flächen 29 mit einem Zentrum 30. Während dem axialen Einfahren des Bechers 2 ist dieser immer noch um einen Winkel 34 um dieses Zentrum 30 schwenkbar, damit der Becher mit einer Schwenkung auf einer planen Auflagefläche 17 der Stützschulter 7 aufliegen kann. Diese Aufteilung in kreiszylindrische Fläche 29 und in ebene Auflagefläche 17 erlaubt eine einfache Bearbeitung der Radscheibe mittels Bohren und Fräsen. Eine ungefähre Mittenlage der Becherschneide in axialer Richtung wird durch eine Sicherungsschraube 32 erreicht, die in einer Tasche 35 an der Stützschulter 7 einsetzbar ist und den Becher 2 auf die Stützschulter 17 presst. Die genaue Mittenlage des Bechers 2 sollte im Bereich von Zentelmillimeter relativ zum Düsenstrahl gleich sein. Bei einem Auswechseln der Becher 2 bei eingebauter Radscheibe 1 wird daher eine die Mitte des Drüsenstrahls markierende Anzeigevorrichtung auf die Düse in einer repetierbaren Aufspannung eingesetzt und ein Becher nach dem anderen durchgedreht. Das seitliche Spiel der Halteschraube 32 in der Ebene der Auflagefläche ist so gross bemessen, dass nach dem Lösen der Halteschraube durch seitliches Klopfen am Becherfuss die angezeigte Mittenlage einstellbar ist und durch Anziehen der Halteschraube 32 gesichert werden kann. Eine einfache, markierende Anzeigevorrichtung ergibt sich mit einem an der Düse aufspannbaren LASER POINTER. Wegen dem berührungslosen aber präzisen Markieren des parallel geführten Lichtstrahls könen alle Becher ohne Lösen der Aufspannvorrichtung eingestellt werden.

Die Halteschraube 32 sichert den Becher 2 gegen ein Ablösen von der Stützfläche 17. Eine Vergrösserung der Anpresskraft zwischen Becher 2 und Stützfläche 17 ergibt sich, wenn der Schwerpunkt 31 des Bechers 2 um einen Abstand 33 oberhalb einer verlängerten Verbindungsgeraden 36 liegt, die den Mittelpunkt M der Radscheibe 1 mit dem Zentrum 30 für den schwenkbaren Becherfuss 3 verbindet. Bei drehendem Peltonrad erzeugt dann die Zentripetalkraft am Schwerpunkt 3 ein Moment in Drehrichtung, das den Becher gegen die Stützfläche 17 presst. Um die Halteschraube nicht zu gefährden, wird man bei einer solchen Konstruktion nach den Figuren 8, 9 und 10 das Peltonrad kaum mit Bremsstrahlen abbremsen, die entgegen der Laufrichtung auf die Becher auftreffen, sondern eine Bremseinrichtung verwenden, die nicht an den Bechern angreift wie beispielsweise mechanische Bremsbacken am Rotor der Peltonturbine. Bei einem Becher aus Kunststoff kann eine metallische Gewindebüchse im Becherkörper eingelegt sein, damit das Gewinde unter der Kraft der Halteschraube 32 nicht ausbricht.

Der Vorteil dieser Konstruktion liegt darin, dass man die Becherteilung D₁/B₂, trotz der Auswechselbarkeit der Becher, bis zu einem Wert gegen 2,5 hinunter verkleinern kann.

## Patentansprüche

1. Peltonrad mit einer Radscheibe (1) und mit einzelnen separat gefertigten Bechern (2) mit Füssen (3), die lösbar in der Radscheibe (1) mit Verankerungselementen (4) befestigt sind, **dadurch gekennzeichnet, dass** die Becher (2) auf ihrer Rückseite (6) in tangentialer Richtung von einer Stützschulter (7) der Radscheibe abgestützt sind, die in radialer Richtung um ein Mass "a" weiter als der nabenseitige Rand (8) der Becher (2) nach aussen vorsteht, um die von einem Düsenstrahl an den Bechern angreifenden Kräfte abzufangen.

2. Peltonrad nach Anspruch 1, **dadurch gekennzeichnet, dass** die Stützschultern jeweils um ein Mass "a", das mehr als ein Drittel der radialen Becherweite (9) beträgt, weiter als der nabenseitige Rand (8) der Becher (2) nach aussen radial vorstehen.

3. Peltonrad nach Anspruch 1 oder 2, **dadurch gekennzeichnet, dass** die Becher (2) mit ihren Füssen (3) in radialer Richtung (5) in der Radscheibe (1) einfahrbar sind.

4. Peltonrad nach Anspruch 3, **dadurch gekennzeichnet, dass** beim radialen Einfahren der Becher (2) zusätzlich eine Schwenkung in einer Ebene quer zur Radachse notwendig ist.

5. Peltonrad nach einem der Ansprüche 1 bis 4, **dadurch gekennzeichnet, dass** die Radscheibe (1) an ihrer Peripherie einen radialen Einstich (10) zur Zentrierung der Becherfüsse aufweist, und dass Stützschultern (7a, 7b) paarweise links und rechts vom Einstich (10) angeordnet sind.

6. Peltonrad nach einem der Ansprüche 1 bis 5, **dadurch gekennzeichnet, dass** die Becher (2) eine Verstärkungsrippe (11a, 11b) an ihren Füssen aufweisen, die in dem Einstich (10) der Radscheibe geführt ist.

7. Peltonrad nach einem der Ansprüche 1 bis 6, **dadurch gekennzeichnet, dass** als Verankerungselemente (4) quer zur Radscheibe (1) angeordnete Bolzen (12) verwendet sind, die mit einem Teilbereich (13) ihres Umfangs an den Becherfüssen (3) anliegen und diese gegen Herausfallen sichern.

8. Peltonrad nach Anspruch 1 oder 2, **dadurch gekennzeichnet, dass** die Becherfüsse (3) in axialer Richtung zylindrisch verlaufende Flächen (24c, 24d, 6) aufweisen und in axialer Richtung zur Befestigung in der Radscheibe einschiebbar sind.

9. Peltonrad nach Anspruch 8, **dadurch gekennzeichnet, dass** die Becherfüsse (3) auf kreiszylindrischen Flächen (29) und auf ebenen Stützflächen (17) an der Radscheibe (1) aufliegen.

10. Peltonrad nach Anspruch 9, **dadurch gekennzeichnet, dass** ein Becher (2) im axial eingefahrenen Zustand in einen vorgegebenen Winkel (34) um das Zentrum (30) der kreiszylindrischen Flächen (29) schwenkbar ist und mit einem Befestigungselement (32) an der Stützfläche (17) anpressbar ist.

11. Peltonrad nach Anspruch 8 oder nach Anspruch 9, **dadurch gekennzeichnet, dass** der Schwerpunkt (32) der Becher (2) um einen Abstand (33) entgegen der Drehrichtung des Peltonrades über einer verlängerten Verbindungsgeraden zwischen dem Mittelpunkt der Radscheibe (1) und dem Zentrum (30) der kreiszylindrischen Fläche (29) liegt.

12. Peltonrad nach einem der Ansprüche 1 bis 11, **dadurch gekennzeichnet, dass** die Becher (2) aus einem Material mit geringem spezifischen Gewicht im Vergleich zu Stahl, beispielsweise aus einem Kunststoff oder aus einer Leichtmetall-Legierung gefertigt sind.

13. Peltonrad nach Anspruch 12, **dadurch gekennzeichnet, dass** die Becher (2) aus einem faserverstärkten oder gewebeverstärkten Kunststoff gefertigt sind.

14. Peltonrad nach Anspruch 12 oder 13, **dadurch gekennzeichnet, dass** mindestens auf der Becheroberseite (14) eine verschleissfeste Schutzschicht (15) aus einem anderen Werkstoff aufgebracht ist.

15. Peltonrad nach Anspruch 12 oder 13, **dadurch gekennzeichnet, dass** auf der Becheroberseite ein verschleisshemmender Füllstoff in die Oberfläche eingebracht ist.

16. Baukasten für verschieden gestufte Bechergrössen von Peltonrädern nach einem der Ansprüche 1 bis 15, **dadurch gekennzeichnet, dass** eine Bechergrösse in Radscheiben mit unterschiedlich grossem Durchmesser einsetzbar ist, wobei die Winkellage (16) der Stützfläche (17) der Stützschulter (7) gegenüber dem Radmittelpunkt soweit geschwenkt ist, dass für die Becher (2) ein dem Durchmesser und der Becherzahl entsprechend günstiger Anstellwinkel gegenüber einem Düsenstrahl erreicht ist.

17. Peltonturbine mit einem Peltonrad nach einem der Ansprüche 1 bis 13.

## Claims

1. Pelton wheel comprising a wheel disc (1) and comprising individual, separately produced buckets (2) with feet (3) which are detachably fastened in the wheel disc (1) by means of anchoring elements (4), **characterized in that** the buckets (2) are supported at their back (6) in the tangential direction by a supporting shoulder (7) of the wheel disc, which shoulder projects outwards in the radial direction by a distance "a" further than that edge (8) of the buckets (2) which is closer to the hub, in order to absorb the forces applied to the buckets by a nozzle jet.

2. Pelton wheel according to Claim 1, **characterized in that** the supporting shoulders each project radially outward by a distance "a", which is more than one third of the radial bucket width (9), further than that edge (8) of the buckets (2) which is closer to the hub.

3. Pelton wheel according to Claim 1 or 2, **characterized in that** the buckets (2) with their feet (3) can be moved in the radial direction (5) into the wheel disc (1).

4. Pelton wheel according to Claim 3, **characterized in that** pivoting in a plane transverse to the wheel axle is additionally necessary when the buckets (2) are moved in radially.

5. Pelton wheel according to any of Claims 1 to 4, **characterized in that** the wheel disc (1) has, at its periphery, a radial incision (10) for centring the bucket feet, and that supporting shoulders (7a, 7b) are arranged in pairs on the left and right of the incision (10).

6. Pelton wheel according to any of Claims 1 to 5, **characterized in that** the buckets (2) have a reinforcing rib (11a, 11b) on their feet, which rib is guided in the incision (10) of the wheel disc.

7. Pelton wheel according to any of Claims 1 to 6, **characterized in that** bolts (12) which are arranged transversely to the wheel disc (1) and a part (13) of whose circumference rests against the bucket feet (3) and prevents them from falling out are used as anchoring elements (4).

8. Pelton wheel according to Claim 1 or 2, **characterized in that** the bucket feet (3) have surfaces (24c, 24d, 6) cylindrical in the axial direction and can be pushed in in the axial direction for fastening in the wheel disc.

9. Pelton wheel according to Claim 8, **characterized in that** the bucket feet (3) rest on cylindrical surfaces (29) and on flat supporting surfaces (17) on the wheel disc (1).

10. Pelton wheel according to Claim 9, **characterized in that**, in the axially retracted state, a bucket (2) is pivotable through a predetermined angle (34) about the centre (30) of the cylindrical surfaces (29) and can be pressed with a fastening element (32) against the supporting surface (17).

11. Pelton wheel according to Claim 8 or according to Claim 9, **characterized in that** the centre (32) of gravity of the buckets (2) is a distance (33) opposite the direction of rotation of the Pelton wheel above an extended connecting line between the mid-point of the wheel disc (1) and the centre (32) of the cylindrical surfaces (29).

12. Pelton wheel according to any of Claims 1 to 11, **characterized in that** the buckets (2) are produced from a material having low density in comparison with steel, for example from a plastic or from a light metal alloy.

13. Pelton wheel according to Claim 12, **characterized in that** the buckets (2) are produced from a fibre-reinforced or fabric-reinforced plastic.

14. Pelton wheel according to Claim 12 or 13, **characterized in that** a wear-resistant protective layer (15) of another material is applied at least to the top (14) of the bucket.

15. Pelton wheel according to Claim 12 or 13, **characterized in that** a wear-inhibiting filler is introduced into the surface at the top of the bucket.

16. Kit for variously graded bucket sizes of Pelton wheels according to any of Claims 1 to 15, **characterized in that** a bucket size can be inserted into wheel discs having diameters of different magnitudes, the angular position (16) of the supporting surface (17) of the supporting shoulder (7) being pivoted relative to the wheel mid-point to such an extent that an angle of attack, relative to a nozzle jet, which is advantageous with respect to the diameter and the number of buckets is achieved for the buckets (2).

17. Pelton turbine having a Pelton wheel as claimed in any of Claims 1 to 13.

## Revendications

1. Roue Pelton munie d'un disque de roue (1) ayant des godets (2) individuels, fabriqués séparément, munis de pieds (3) fixés de façon désolidarisable dans le disque de roue (1) à l'aide d'éléments d'ancrage (4), **caractérisée en ce que** les godets (2) sont soutenus, sur leur face arrière (6), en direction tangentielle par un épaulement d'appui (7) du disque de roue, qui fait saillie vers l'extérieur en direction radiale d'une distance "a" par rapport au bord (8) côté moyeu des godets, afin de capter les efforts agissant sur les godets et produits par un jet de buse.

2. Roue Pelton selon la revendication 1, **caractérisée en ce que** les épaulements d'appui font saillie radialement vers l'extérieur, chacun d'une distance "a" supérieure à un tiers de l'envergure (9) radiale du godet, en se projetant plus loin que le bord (8) côté moyeu des godets (2).

3. Roue Pelton selon la revendication 1 ou 2, **caractérisée en ce que** les godets (2) peuvent être insérés par leurs pieds (3) en direction radiale (5) dans le disque de roue (1).

4. Roue Pelton selon la revendication 3, **caractérisée en ce que**, lors de l'insertion radiale des godets (2), il faut en plus effecteur un pivotement dans le plan transversal par rapport à l'axe de roue.

5. Roue Pelton selon l'une des revendications 1 à 4, **caractérisée en ce que** le disque de roue (1) présente sur sa périphérie une entaille radiale (10) pour le centrage des pieds de godet, et **en ce que** des épaulements d'appui (7a, 7b) sont disposés par paires à gauche et à droite de l'entaille (10).

6. Roue Pelton selon l'une des revendications 1 à 5, **caractérisée en ce que** les godets (2) présentent sur leurs pieds une nervure de renforcement (11a, 11b) guidée dans l'entaille (10) du disque de roue.

7. Roue Pelton selon l'une des revendications 1 à 6, **caractérisée en ce que** sont utilisés comme éléments d'ancrage (4) des boulons (12) disposés transversalement par rapport au disque de roue (1), boulons mis en appui sur les pieds de godet (3) par une zone partielle (13) de leur périphérie et assurant ceux-ci contre toute expulsion.

8. Roue Pelton selon la revendication 1 ou 2, **caractérisée en ce que** les pieds de godet (3) présentent des faces (24c, 24d, 6) d'allure cylindrique en direction axiale et sont susceptibles d'être introduits en direction axiale dans le disque de roue, dans un but de fixation.

9. Roue Pelton selon la revendication 8, **caractérisée en ce que** les pieds de godet (3) reposent sur des faces (29) cylindriques à section circulaire et sur des faces d'appui (17) planes sur le disque de roue (1).

10. Roue Pelton selon la revendication 9, **caractérisée en ce qu'**un godet (2), à l'état introduit axiale ment, est susceptible de pivoter d'un angle (34) prédéterminé autour du centre (30) des faces (29) cylindriques à section circulaire et est susceptible d'être pressé sur la face d'appui (17) à l'aide d'un élément de fixation (32).

11. Roue Pelton selon la revendication 8 ou la revendication 9, **caractérisée en ce que** le centre de gravité (31) des godets (2) est situé, en observant dans le sens inverse du sens de rotation de la roue Pelton, à une distance (33), sur une droite de liaison prolongée tracée entre le centre du disque de roue (1) et le centre (30) de la face (29) cylindrique à section circulaire.

12. Roue Pelton selon l'une des revendications 1 à 11, **caractérisée en ce que** les godets (2) sont fabriqués en un matériau à faible poids spécifique par rapport à l'acier, par exemple en une matière synthétique ou bien en un alliage de métal léger.

13. Roue Pelton selon la revendication 12, **caractérisée en ce que** les godets (2) sont fabriqués en une matière synthétique renforcée par des fibres ou bien renforcée par un textile.

14. Roue Pelton selon la revendication 12 ou 13, **caractérisée en ce qu'**au moins sur la face supérieure de godet (14) est appliquée une couche protectrice (15) résistante à l'usure, formée d'un autre matériau.

15. Roue Pelton selon la revendication 12 ou 13, **caractérisée en ce que** sur la face supérieure de godet est insérée dans la surface une charge ayant comme effet d'empêcher l'usure.

16. Système de construction pour différentes tailles, échelonnées, de godets de roues Pelton selon l'une des revendications 1 à 15, **caractérisé en ce qu'**une taille de godet peut être insérée dans des disques de roue à diamètre différents, la position angulaire (16) de la face d'appui (17) des épaulements d'appui (7) par rapport au centre de roue étant pivotée de manière qu'on obtienne pour le godet (2) un angle de calage avantageux, correspondant au diamètre et au nombre de godets, par rapport au jet de buse.

17. Turbine Pelton équipée d'une roue Pelton selon l'une des revendications 1 à 13.
